# EUROPEAN PATENT SPECIFICATION

(11) **EP 0 633 861 B1**
(45) Date of publication and mention of the grant of the patent: **08.01.1997**
(21) Application number: 93908926.4
(22) Date of filing: 07.04.1993
(51) Int. Cl.: B65D 85/78

(54) **PROCESS FOR FORMING PACKAGED SOLIDIFICABLE FOOD PRODUCTS, IN PARTICULAR HAND-HELD ICE-CREAMS AND CONTAINER FOR IMPLEMENTING THE PROCESS**
VERFAHREN ZUR FORMUNG VERPACKTER ERSTARRENDER LEBENSMITTEL, INSBESONDERE HANDGEHALTENEM SPEISEEIS UND BEHÄLTNIS ZUR DURCHFÜHRUNG DIESES VERFAHRENS
PROCEDE PERMETTANT DE PREPARER DES PRODUITS ALIMENTAIRES ENVELOPPES ET POUVANT DURCIR, PLUS PARTICULIEREMENT DES ESQUIMAUX ET RECIPIENT UTILISE POUR METTRE EN UVRE LEDIT PROCEDE

(30) Priority: 10.04.1992 IT PD920064
(43) Date of publication of application: 18.01.1995
(73) Proprietor: Trani, Giorgio, 30100 Venezia (IT)
(72) Inventor: Trani, Giorgio, 30100 Venezia (IT)
(74) Representative: Piovesana, Paolo
(86) International application number: EP9300861
(87) International publication number: WO9321087

(56) References cited:
- GB-A- 835 066
- US-A- 797 775
- US-A- 2 227 236
- US-A- 2 759 826
- US-A- 2 759 831
- US-A- 2 936 940

## Description

This invention relates to a process for forming packaged solidificable food products, in particular hand-held ice-creams and a container for implementing the process.

Hand-held ice-creams are currently produced by pouring the ice-cream compound, of liquid or semi-liquid consistency depending on the final product to be obtained, into a plurality of metal moulds maintained in a brine bath. Before the compound in the moulds completely solidifies, a stick of wood or plastics or edible material (sugar, liquorice etc.) is inserted into each of them so that when the compound has completely solidified the stick remains securely fixed to it. The ice-cream obtained in this manner is then extracted from the corresponding mould and deposited on a conveyor belt to be fed for packaging within a suitable paper container.

This known process was previously carried out manually but is now performed by rather sophisticated machines which although able to automate the production cycle suffer from a series of drawbacks and limitations which it is the object of the present invention to overcome.

One drawback of this known process is that it requires rather complicated and costly equipment (the moulds) which inter alia has to be changed each time the shape of the produced ice-cream is to be varied.

A further drawback is that equally complicated and costly equipment is required for inserting the stick into the mould, and as this insertion has to be effected at a precise point during the ice-cream solidifying stage, the processing times have to be rigorously controlled, these varying in relation to the shape of the ice-cream to be obtained and the ice-cream compound used.

A further drawback is that the transfer of the ice-cream to the packaging machine after extraction from the mould can involve problems regarding the rigorous maintaining of hygienic conditions, because of the exposure of the product to the external environment.

A further drawback is that the shape of the ice-cream obtainable and hence of the mould used to produce it is subject to considerable limitations, in that undercuts must be totally avoided as they would prevent correct removal of the ice-cream from the mould.

A further drawback is that during the consumption of the ice-cream, ie when the protective wrapper has been removed from the ice-cream and this is held by the consumer only by the stick, the hand of the consumer can be soiled because of the inevitable dripping of those parts of the ice-cream which progressively become liquid.

GB-A-835 066 discloses a package formed from heat-sealing sheet material opposed portions of which are sealed along their free marginal edges and enclose a charge of liquid in which is partially submerged a stick which is positioned laterally by sealing the opposed portions of material.

Aim of the invention is to realize a process which overcomes the above mentioned drawbacks.

This aim is achieved according to the invention through a process for forming packaged solidificable food products, in particular hand-held ice-creams as described in claim 1.

To implement this process the invention uses a container as described in claim 9.

Some preferred embodiments of the present invention are described in greater detail hereinafter with reference to the accompaning drawings, in which:
- Figure 1: is a perspective view of an empty container used for implementing the process of the invention;
- Figure 2: is a schematic view thereof after its filling and sealing;
- Figure 3: shows it after tearing the enclosure when the ice-cream is to be consumed;
- Figure 4: is a plan development of the container of Figure 1;
- Figure 5: is a perspective view of the lower part of the container without ice-cream;
- Figure 6: shows a modified embodiment of the container of the invention in the same view as Figure 4;
- Figure 7: is a perspective view of the lower part of the container of Figure 6;
- Figure 8: shows a further embodiment of the container of the invention in the same view as Figure 4;
- Figure 9: is a perspective view of the lower part of the container of Figure 8;
- Figure 10: shows a further embodiment of the container of the invention in the same view as Figure 4;
- Figure 11: is a perspective view of the lower part of the container of Figure 10;
- Figure 12: is a perspective view of a different embodiment of the container of the invention;
- Figures 13a, 13b and 13c: are plan views showing the complete plan development of the container of Figure 12 plus two successive stages in the folding of the part which is to form the internal appendix;
- Figures 14a, 14b and 14c: are plan views showing the complete plan development of the container of Figure 12 plus two successive stages in the folding of the part which is to form a different internal appendix;
- Figures 15a, 15b and 15c: are plan views showing the complete plan development of the container of Figure 12 plus two successive stages in the folding of the part which is to form another different internal appendix;
- Figure 16: is a perspective view of a further embodiment of the container according to the invention;
- Figure 17a: shows the plan development of Figure 16;
- Figure 17b: is a perspective view of the container of Figure 16 in its folded configuration;
- Figure 18: is perspective view of a further embodiment of the container according to the invention;
- Figure 19a: shows the plan development of the container of Figure 18;
- Figures 19b and 19c: are perspective views of the container of Figure 18 in two successive stages of folding; and
- Figure 20: shows in perspective view a container in a further embodiment.

As can be seen from the figures the process of the invention uses as its essential element a container 2 of impermeabilized paper material, such as paper which has been plastic-coated, metallized or otherwise impermeabilized. It is formed by punching a continuous web of paper material, which is then subjected to a series of folds to form an enclosure 4 of the desired shape, comprising an upper aperture 6 and a lower appendix which extends downwardly outwards to form the gripping element 8 and upwardly inwards to form a locking element 10 for the solidified ice-cream 12, as will be apparent hereinafter.

The shape of the container 2 is made stable after folding, by thermowelding, gluing or another method of joining together the edges of the enclosure.

To implement the process of the invention, after the container 2 has been formed it is positioned with its aperture 6 facing upwards and made to pass, either alone or together with other similar containers, below one or more filling nozzles which pour into the enclosure 4 a predetermined quantity of ice-cream compound, ie a liquid or semi-liquid mixture of ingredients which after solidification form an ice-cream, a cake ice, an iced lolly or an analogous product. These products may consist of cream cheese, chocolate cube, caramel paste.

This compound fills the enclosure 4 to a predetermined level, completely surrounding the locking element 10 and penetrating into a series of holes provided in it.

When the container 2 has been sealed it can be transferred to a freezer in which the ice-cream 12 is completely solidified and can also be stored therein. It can also be used for products which are substantially solid at ambient temperature, these being poured into the enclosure 4 at a higher temperature, and hence in the liquid or pasty state.

To consume the ice-cream the consumer firstly tears the enclosure 4, for which purpose in order to facilitate the operation the enclosure is provided with a tear-off tab 16, two preferential tear lines 18 also being provided in the enclosure 4.

The position of the tab 16 is chosen so as to divide the enclosure 4 into an upper part which is completely removed, and a lower part which remains connected to the gripping element 8 to form a sort of cup 20 to prevent dripping of the ice-cream.

Various forms of the container 2 are described hereinafter, all obtained from impermeabilized paper.

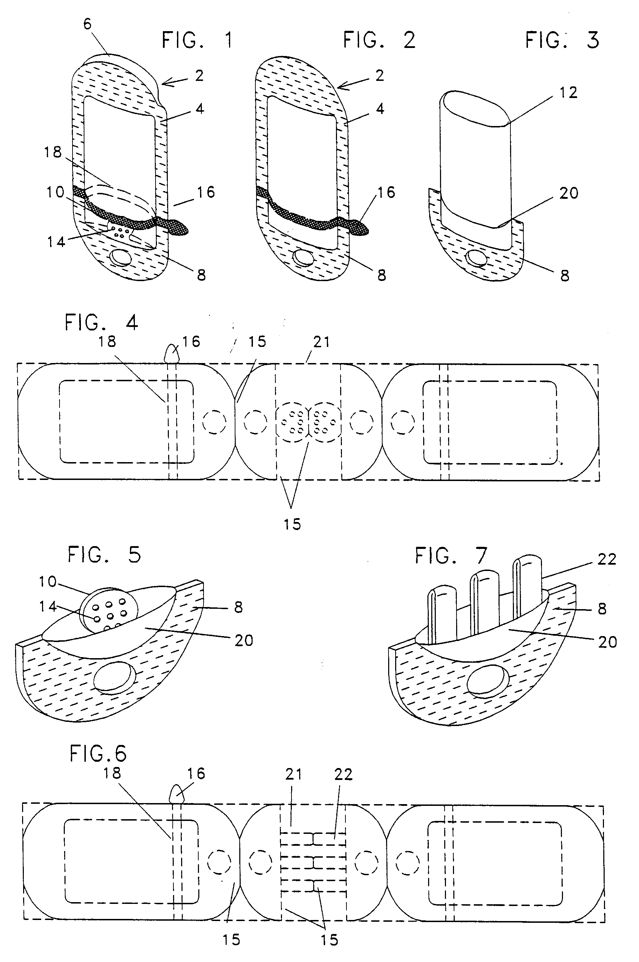

Figure 4 shows the plan development of a punched paper web from which the container shown in Figures 1-3 can be obtained following a series of successive folds and final welding. By punching the continuous web 21 of impermeabilized paper, the plan development of the container 2 is obtained already provided with a plurality of folding lines 15, tabs 16 and preferential tear lines 18. The punched web 21 is then folded and welded along the contacting edges, shown hatched in Figure 1. After welding the edges the container 2 assumes the appearance shown in Figure 1 and can be filled with ice-cream compound. After filling, the aperture 6 is closed by sealing its edges and the whole product, which assumes the appearance of Figure 2, is then cooled.

To consume the ice-cream 12 the tab 16 is torn off and the upper part of the enclosure 4 is removed, its lower part forming the gripping appendix 8 for the ice-cream and the cup 20 which retains any drips falling therefrom.

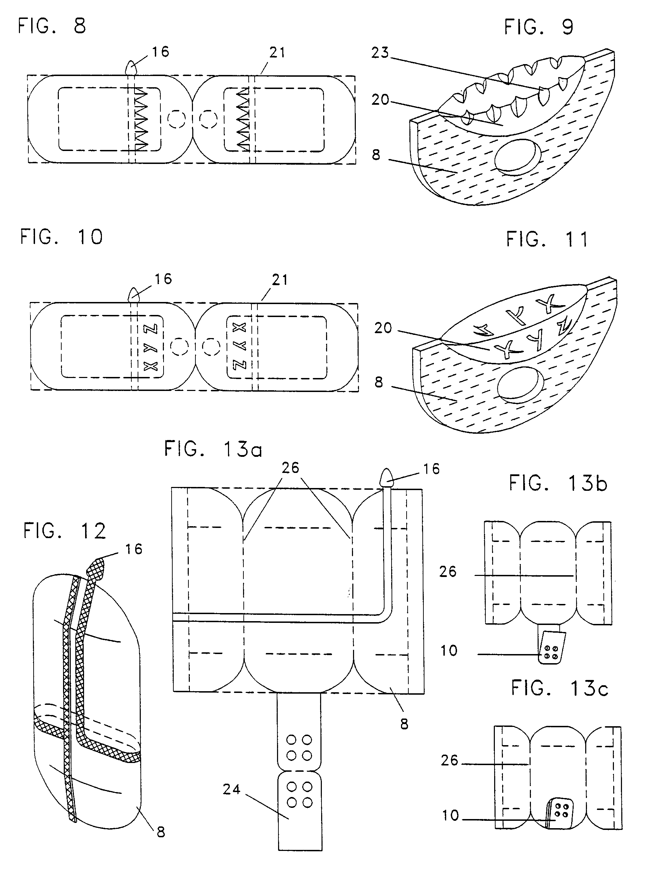

Figure 6 shows a different form of the ice-cream container, the locking element 10 being a plurality of appendices 22. Figure 7 shows the lower part of the container 2, comprising the gripping appendix 8, the anti-drip cup 20 and the locking appendices 22 for the ice-cream 12.

Figures 8 and 9 show a further embodiment in which the locking element 10 consists of a plurality of folds 23 provided in both the edges of the cup 20 and projecting inwards thereof.

Figures 10 and 11 show a further embodiment, in which the locking element 10 is in the form of signs (letters, numerals, designs in general) impressed into the impermeabilized paper and projecting inwards from the walls of the cup 20. Other signs (not shown on the drawings) can also be impressed in those paper regions forming the removable part, in order to form incisions and/or reliefs in that part of the ice-cream 12 which projects from the cup 20.

Figure 12 shows a further sealed ice-cream container. It is again obtained from a punched, folded and welded paper sheet, its thickness determining the method of forming the inner locking appendix 10.

For example Figures 13a, 13b and 13c shows three successive stages in the formation of an enclosure 4 in which the inner locking appendix 10 is obtained by twice transversely folding (horizontally in the drawings) a paper tab 24 forming the appendix 10. Complete formation of the enclosure is achieved by folding the sheet along the two vertical lines 26 and welding the contacting edges.

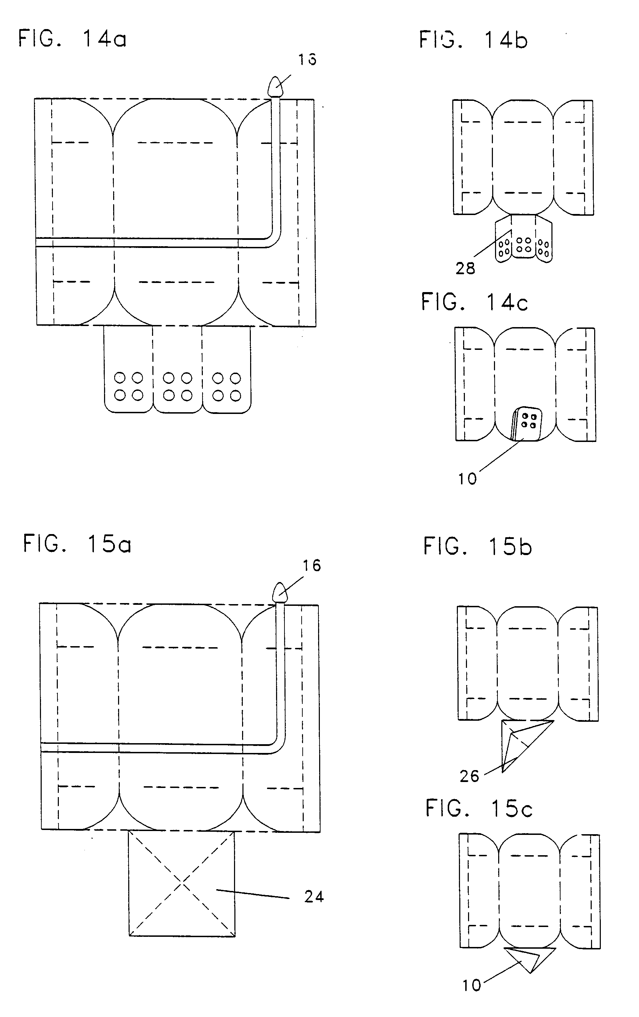

If the paper used to form the enclosure is thinner, it may be necessary to fold three times the paper tab 24 forming the locking appendix 10. In this respect Figures 14a, 14b and 14c show three stage in the formation of the enclosure 4, comprising firstly folding the tab 24 about two vertical lines to obtain an appendix 28 (Figure 14b) three times the thickness of the paper, which is then folded upwards through 180° to form the locking element 10 (Figure 14c).

If the paper is even thinner, or if a locking appendix 10 thicker than that obtainable by the present embodiment is required, a different system of folding the paper tab 24 forming said locking appendix 10 can be used.

Specifically said tab 24, which is square (Figure 15a), is firstly folded along one diagonal (Figure 15b) and then along the other diagonal (Figure 15c) and then upwards to form the appendix 10, which is four times the thickness of the paper.

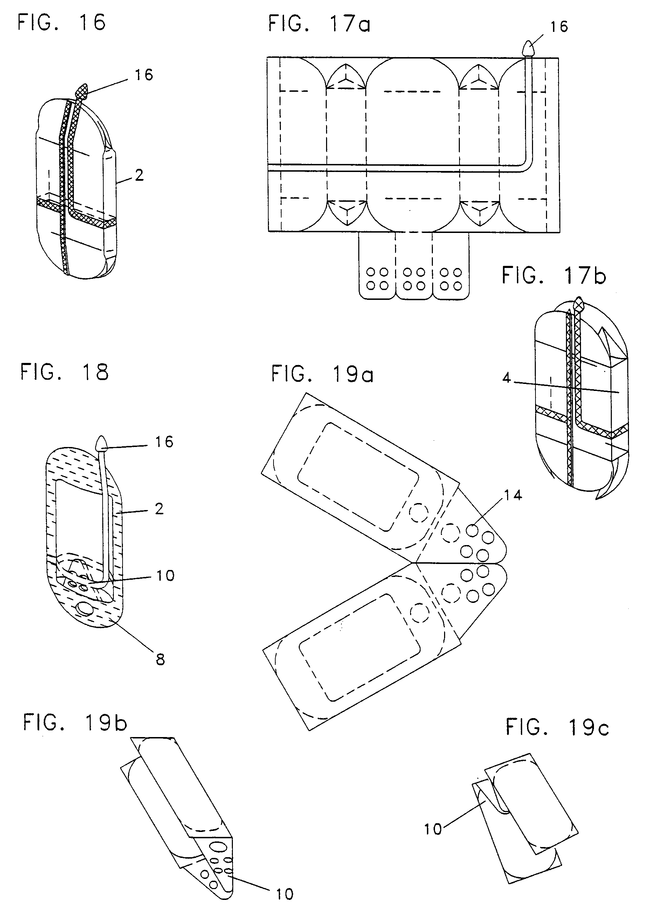

In the embodiment shown in Figures 16, 17a and 17b the container of the invention is substantially analogous to that shown in Figure 12, except that its lower and upper ends are of "bellows" form, as can be seen in Figure 17a showing the punched paper sheet, ie the container in plan development, and from Figure 17b showing the same sheet folded both in the part forming the locking appendix and in the part forming the actual enclosure.

A further embodiment of the container according to the invention is shown in Figure 18. It is formed by firstly folding the punched outline of impermeabilized paper (Figure 19a) so that the two tabs forming the locking element 10 are superposed and joined along the folding line, whereas the two parts forming the two walls of the enclosure 4 are superposed but are free and not joined together (Figure 19b). These two latter parts are then folded through 180° in opposite directions (Figure 19c) and are then welded along their edges to form the enclosure 4, internally containing the locking element 10 suitably provided with holes 14. After filling the enclosure 4 and sealing the aperture through which the ice-cream compound has been poured, the container is ready for cooling, and has the configuration shown in Figure 18.

In all the embodiments heretofore described, the inner locking appendix 10 and the outer gripping appendix 8 are integral with the paper forming the enclosure 4.

It is however possible for one or both of these appendices to be formed separately of the same or different material and then be joined to the enclosure 4 before or during its formation.

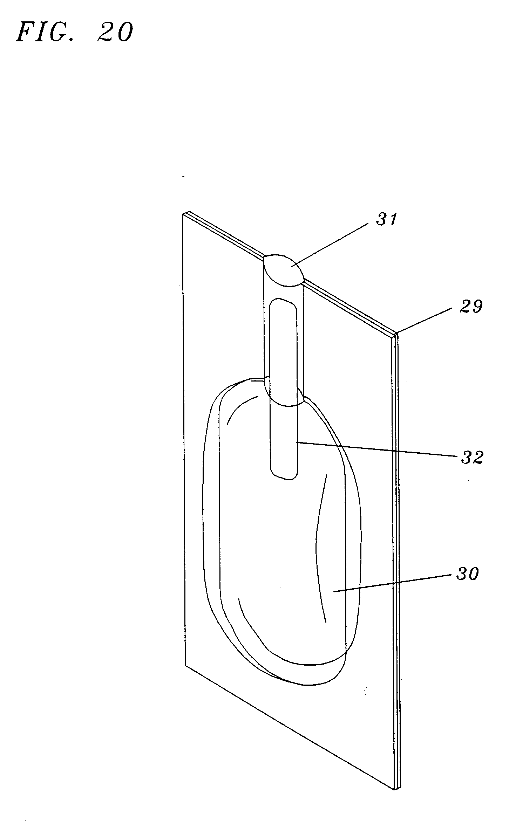

In the embodiment shown in figure 20 the container consists of two thermoweldable material sheets 29 which, suitably shaped and joned each other to, form a cavity 30 corresponding to the shape of the ice-cream and an open duct 31 for the insertion of a stick 32 forming the inner locking appendix and the outer gripping appendix.

Once the ice-cream compound, in the liquid or semi-liquid state, has been poured into the cavity, the stick 32 is partly embedded in the compound, and subsequently the upper end of the duct 31 is thermowelded so as to obtain an entirely sealed products which, when consumed, presents like a traditional hand-held ice-cream with stick.

In a further embodiment not shown in the drawings two opposite walls of the enclosure 4 may be welded together in a limited zone so as to lock the ice-cream once has been poured therein.

In addition all the described embodiments are obtained from impermeabilized paper, which is suitably punched, folded and welded along the contacting edges. It is however possible to form the container 2 of plastics material by conventional blow moulding or injection moulding techniques, which require more complicated equipment but eliminate the described operations on the paper. If the container is of thermoformed plastics material and hence more rigid than a paper container, the enclosure 4 is preferably sealed not by welding the edges of the aperture 6 but by applying a plastics "cap" the edge of which engages the inner wall of the enclosure by friction.

Furthermore it may also be possible to realize the container 2 in eatable material.

Basically, independently of the particular embodiment and the method used for forming the container 2, it represents a considerable modification to the conventional technique in that at one and the same time it forms the mould for the ice-cream compound, the sealed enclosure for transferring said compound from its place of filling to its place of cooling, the enclosure for storing the packaged ice-cream, the gripping element for the ice-cream during its consumption, and an antidrip cup, hence presenting numerous advantages because of these new functions, namely:
- it substantially reduces the labouriousness of ice-cream packaging because the moulds into which the ice-cream compound is poured, the brine baths and the machines for inserting the sticks into the moulds during solidification of the compound are no longer required,
- it consequently reduces the cost of equipment, and in particular of the moulds, which would have to be changed each time the shape of the ice-cream changes,
- it results in totally hygienic production as the container is sealed immediately after its filling,
- it allows ice-creams of any shape, including with undercuts, to be formed as the ice-cream no longer has to be removed from its mould,
- it enables a relief design, variable from container to container, to be formed on the ice-cream by simply impressing the paper sheet,
- because of the presence of the antidrip cup it enables the gripping appendix to be formed with a height less than that of traditional sticks, so substantially reducing the overall size of the packaged ice-cream, with consequent considerable saving in the space to be cooled,
- it enables multiple packs to be formed, ie in the form of several individual packs joined together and separable on consuming, with substantial filling and transport simplification,
- if certain ice-cream compounds are used (for example for forming iced lollies) it enables cold production to be dispensed with and allows the product to be solidified at the final point of sale or even by the consumer insted of immediately after filling the container.

## Claims

1. A process for forming packaged hand-held solidificable food products, in particular ice-creams, characterised by:
- forming from ice-cream impermeable material an openable enclosure (4,29) provided with at least one aperture (6,31) for feeding an ice-cream compound into it and with an outwardly projecting appendix (8) forming a gripping element for the packaged ice-cream,
- providing said enclosure (4) with separating means for an upper part removable from a lower part (20) rigid with the gripping appendix (8), said lower part (20) being provided with at least one inwardly projecting appendix for locking said ice-cream (12),
- filling said enclosure (4,29) with the ice-cream compound,
- hermetically sealing said filled enclosure (4,29), and
- cooling the thus filled and sealed enclosure until said compound has completely solidified.

2. A process as claimed in claim 1, characterised by providing the enclosure (4) with tear-off means for opening it.

3. A process as claimed in claim 1 characterised in that at least two walls of the enclosure are partly connected each other to, to lock the solified product.

4. A process as claimed in claim 1 characterised in that, before hermetically sealing the filled enclosure (29), through the opening (31) an appendix (32) is inserted a part of which is embedded in the ice-cream compound.

5. A process as claimed in claim 1, characterised by simultaneously filling a plurality of side-by-side enclosure (4).

6. A process as claimed in claim 1, characterised by sealing the enclosure (4), filled with ice-cream compound, by welding the contacting edges of said aperture (6).

7. A process as claimed in claim 1, characterised by sealing the enclosure (4), filled with ice-cream compound, by means of a cap applied to the aperture (6).

8. A process as claimed in claim 1, characterised by cooling the enclosure (4) immediately after it has been filled and sealed.

9. A container for implementing the process claimed in one or more of claims 1 to 8, characterised by comprising an openable enclosure (4,29) of impermeable material provided with at least one aperture (6,31) for feeding an ice-cream compound into it, said enclosure (4) comprising separating means for an upper part removable from a lower part rigid with an outwardly projecting appendix (8) forming the gripping element for the packaged ice-cream, said appendix (8) being provided with at least one appendix (10,22,23,32) which projects into the enclosure, said filling aperture (6,31) being sealable hermetically after the filling.

10. A container as claimed in claim 9 characterised in that at least two opposite walls are partly connected each other to to lock the solified product.

11. A container as claimed in claim 9, characterised in that the enclosure (4) is formed of impermeabilized paper.

12. A container as claimed in claim 9, characterised in that the enclosure (4) is formed of thermoformed plastics.

13. A container as claimed in claim 9, characterised in that the enclosure (4) is of the tearable type and is provided with a tab (16) for facilitating this tearing.

14. A container as claimed in claim 9, characterised in that the edges of the aperture (6) in the enclosure (4) can be brought into contact for sealing the container.

15. A container as claimed in claim 9, characterised in that the enclosure (4) is formed of eatable material.

16. A container as claimed in claim 9, characterised in that the enclosure (4) is provided with a substantially rigid sealing element formed separately from the enclosure and engaging by means of its edge the inner wall of said enclosure surrounding the aperture (6).

17. A container as claimed in claim 9, characterised in that the appendix (10,22,32) lockable by the ice-cream (12) is formed separately from the enclosure (4) and is joined thereto during the enclosure formation.

18. A container as claimed in claim 9, characterised in that the appendix (10,22,23) lockable by the ice-cream is formed integrally with said enclosure (4).

19. A container as claimed in claim 11, characterised by consisting of a punched sheet of impermeabilized paper which is folded into several parts defining the walls of the enclosure (4) and the gripping appendix (8) and is sealed along all its contacting edges with the exception of the portions defining the filling aperture (6).

20. A container as claimed in claim 19, characterised in that the sheet of impermeabilized paper is folded into parts defining the walls of the enclosure (4), the outer appendix (8) and the inner appendix (10,22,23).

21. A container as claimed in claim 18, characterised in that the inner appendix (10,22) comprises a plurality of locking apertures (14).

22. A container as claimed in claim 18, characterised in that the inner appendix consists of at least one rib formed in the sheet of impermeabilized paper and projecting inwards of the enclosure (4).

23. A container as claimed in claim 9, characterised in that the enclosure (4) is divided into a first part (20) connected to the gripping appendix (8) and forming a collection cup for ice-cream droplets, and a completely removable second part, the inner appendix (10,22,23) being connected to said first part (20).

24. A container as claimed in claim 9, characterised in that the enclosure (4) is of bellows formation.

25. Assembly with a plurality of containers as claimed in one or more of claims 9 to 25, characterised by consisting of a plurality of enclosures (4) formed in one piece and separable on consuming the ice-cream.

## Patentansprüche

1. Herstellungsverfahren für das Formen in der Hand zu haltender, verpackter, sich verfestigender Lebensmittelprodukte, vornehmlich Speiseeis, dadurch gekennzeichnet:
- daß aus für Eis geeignetem undurchlässigem Material eine öffenbare Hülle geschaffen wird (4,29), die mit mindestens einer Öffnung (6,31) versehen ist, um die Eismasse einzufüllen und die einen Fortsatz nach außen besitzt, um die Packung zu halten;
- daß besagte Hülle (4) mit Mittel versehen ist, die es gestatten, den oberen Teil vom unteren (20) mit dem festen Fortsatz zu trennen, welcher wiederum mit mindestens einem nach innen ragenden Teil versehen ist, um das Eis zu verankern (12);
- daß besagte Hülle (4,29) mit der Eismasse befüllt wird;
- daß besagte befüllte Hülle (4,29) hermetisch versiegelt wird und
- daß die so befüllte und versiegelte Hülle gekühlt wird, bis sich die Eismasse verfestigt hat;

2. Verfahren nach Anspruch 1, dadurch gekennzeichnet, daß die Hülle (4) mit Mitteln versehen ist, die ihr Öffnen durch Aufreißen gestatten;

3. Verfahren nach Anspruch 1, dadurch gekennzeichnet, daß mindestens zwei Seitenwände teilweise zusammengefügt werden, um das erhärtete Produkt zu verankern;

4. Verfahren nach Anspruch 1, dadurch gekennzeichnet, daß, bevor besagte Hülle (29) hermetisch versiegelt wird, durch die Öffnung (31) ein Stiel (32) eingeführt wird, der zu einem gewissen Teil in der Eismasse eingebettet wird;

5. Verfahren nach Anspruch 1, dadurch gekennzeichnet, daß mehrere Hüllen gleichzeitig nebeneinander befüllt werden;

6. Verfahren nach Anspruch 1, dadurch gekennzeichnet, daß das Versiegeln der mit Eismasse befüllten Hülle (4) durch Verschweißen ihrer zusammengefügten Enden der Öffnung (6) erfolgt;

7. Verfahren nach Anspruch 1, dadurch gekennzeichnet, daß das Versiegeln der mit Eismasse befüllten Hülle (4) durch Aufsetzen einer Verschlußkappe auf die Öffnung (6) erfolgt;

8. Verfahren nach Anspruch 1, dadurch gekennzeichnet, daß die Hülle (4) sofort nach ihrem Befüllen und Versiegeln gekühlt wird;

9. Ein Behälter zur Anwendung des Verfahrens, nach einem oder mehreren der Ansprüche 1-8, dadurch gekennzeichnet, daß er aus einer öffenbaren Hülle (4, 29) aus undurchlässigem Material besteht, die mit mindestens einer Öffnung (6, 31) versehen ist, um die Eismasse einzufüllen, daß besagte Hülle derart ausgeführt ist, daß man den oberen Teil von dem festen unteren mit seinem Fortsatz (8) trennen kann, welcher das Halten des so verpackten Eises ermöglicht, daß besagter Fortsatz (8) mit mindesten einem Fortsatz (10, 22, 23, 32) versehen ist, der in das Innere der Hülle hineinragt und daß die Einfüllöffnung (6, 31) nach dem Füllen hermetisch verschlossen werden kann;

10. Behälter nach Anspruch 9, dadurch gekennzeichnet, daß mindestens zwei gegenüberleigende Seitenwände teilweise zusammengefügt werden, um das verfestigte Produkt zu verankern;

11. Behälter nach Anspruch 9, dadurch gekennzeichnet, daß die Hülle (4) aus undurchlässigem Papier besteht;

12. Behälter nach Anspruch 9, dadurch gekennzeichnet, daß die Hülle (4) aus thermisch verformtem Plastik besteht;

13. Behälter nach Anspruch 9, dadurch gekennzeichnet, daß die Hülle (4) aufreißbar ist und mit einer Lasche versehen ist, die das Aufreißen erleichtert;

14. Behälter nach Anspruch 9, dadurch gekennzeichnet, daß die Enden an der Öffnung (6) bei der Hülle (4) zusammengefügtwerden können, um den Behälter zu versieglen;

15. Behälter nach Anspruch 9, dadurch gekennzeichnet, daß die Hülle (4) aus eßbarem Material besteht;

16. Behälter nach Anspruch 9, dadurch gekennzeichnet, daß die Hülle (4) mit einem im wesentlichen harten Element zu ihrem Verschließen versehen ist, das unabhängig von der Hülle selbst hergestellt wird, und mit seinem Randstreifen an der Innenseite der besagten Hülle um die Öffnung (6) herum anschließt.

17. Behälter nach Anspruch 9, dadurch gekennzeichnet, daß der Fortsatz (10,22,23) an dem und durch den das Eis (12) befestigt wird unabhängig von der Hülle (4) hergestellt und erst während deren Formung hinzugefügt wird.

18. Behälter nach Anspruch 9, dadurch gekennzeichnet, daß der Fortsatz (10,22,23) an dem und durch den das Eis befestigt wird aus einem Stück mit der Hülle (4) geformt wird.

19. Behälter nach Anspruch 11, dadurch gekennzeichnet, daß er aus einem vorgeprägten Stück undurchlässigen Papiers besteht, das durch Falten die Seitenwände der Hülle (4) und den Fortsatz (8), der zum Halten dient, entstehen läßt, und das längs seiner Randstreifen unter Ausschluß derer um die Füllöffnung (6) herum zusammengefügt wird.

20. Behälter nach Anspruch 19, dadurch gekennzeichnet, daß das Stück undruchlässigen Papiers durch Falten die Seitenwände des Behälters (4), den äußeren Haltegriff (8) und den inneren Fortsatz (10, 22, 23) entstehen läßt.

21. Behälter nach Anspruch 20, dadurch gekennzeichnet, daß der innere Fortsatz (10, 22) einige Öffnungen zur Verankerung (14) des Inhalts aufweist.

22. Behälter nach Anspruch 18, dadurch gekennzeichnet, daß der innere Fortsatz in mindestens einer Rippe besteht, die aus dem Stück undurchlässigen Papiers geformt wird und ins Innere der Hülle (4) ragt.

23. Behälter nach Anspruch 9, dadurch gekennzeichnet, daß der Behälter (4) bei seinem Öffnen in zwei Teile unterteilbar ist, deren erster mit dem Griff (8) verbunden ist und eine Auffangschüssel für die Tropfen des Eises bildet und deren zweiter komplett abnehmbar ist, wahrend der innere Fortsatz (10, 22, 23) mit dem besagten ersten Teil (20) verbunden ist.

24. Behälter nach Anspruch 9, dadurch gekennzeichnet, daß die Hülle (4) aus einer Faltung heraus geformt wird.

25. Vielzahl von Behältnissen nach einem oder mehreren Ansprüchen von 9 bis 25, dadurch gekennzeichnet, daß eine Vielzahl von Behältern (4) an einem Stück geformt wird, welche zum Verzehr des Eises einzeln abtrennbar sind.

## Revendications

1. Processus pour la réalisation de produits alimentaires solidifiables, a emporter, en particulier des glaces, caractérisé par:
- la réalisation d'un emballage ouvrant (4,29) en matériau imperméable, doté d'au moins une ouverture (6,31) pour pouvoir le remplir du mélange de glace et doté d'un élément extérieur qui permet de tenir la glace emballée en main,
- la réalisation de l'emballage mentionné ci-dessus, séparant la partie supérieure amovible de la partie inférieure (20) rigide au moyen d'un élément extérieur (8); la partie inférieure mentionnée (20) est dotée d'au moins un élément intérieur qui permet de fixer la glace mentionnée (12),
- le remplissage des emballages mentionnés ci-dessus (4,29) par le mélange de glace,
- le scellement hermétique de l'emballage mentionné ci-dessus (4,29), ainsi que
- le refroidissement de l'emballage rempli et scellé jusqu'a ce que le mélange mentionné devienne complètement solide.

2. Processus tel qu'il est décrit dans la Revendication 1, caractérisé par un moyen de déchirer facilement l'emballage.

3. Processus tel qu'il est décrit dans la Revendication 1, caractérisé par le fait qu'au moins deux des parois sont partiellement jointes l'une a l'autre pour contenir le produit solidifié.

4. Processus tel qu'il est décrit dans la Revendication 1, caractérisé par le fait qu'avant de sceller hermétiquement l'emballage rempli (29) a travers l'ouverture (31), on insère un élément dont une partie est intégrée dans le mélange de glace.

5. Processus tel qu'il est décrit dans la Revendication 1, caractérisé par le remplissage simultané d'une pluralité d'emballages disposés l'un a côté de l'autre (4).

6. Processus tel qu'il est décrit dans la Revendication 1, caractérisé par le scellement de l'emballage (4) rempli de mélange de glace, par soudure des bords de l'ouverture mentionnée (6).

7. Processus tel qu'il est décrit dans la Revendication 1, caractérisé par le scellement de l'emballage (4), rempli de mélange de glace, en utilisant un capuchon appliqué a l'ouverture (6).

8. Processus tel qu'il est décrit dans la Revendication 1, caractérisé par le refroidissement de l'emballage (4) immédiatement après avoir été rempli et scellé.

9. Récipient pour la mise en oeuvre du processus tel qu'il est décrit dans une ou plusieurs des Revendications 1 a 8, caractérisé par la constitution d'un emballage ouvrant (4,29) en matériau imperméable, doté d'au moins une ouverture (6,31) pour remplir avec le mélange de glace l'emballage mentionné ci-dessus (4) constituant un moyen de séparation entre la partie supérieure amovible et la partie inférieure rigide graçe a un élément extérieur qui permet de tenir en main la glace emballée. L'élément mentionné ci-dessus (8) est doté d'un élément (10,22,23,32) saillant dans l'emballage. L'ouverture mentionnée ci-dessus est scellable hermétiquement après le remplissage.

10. Récipient tel qu'il est décrit dans la Revendication 9 caractérisé par le fait qu'au moins deux des parois opposées sont partiellement jointes l'une a l'autre pour contenir le produit solidifié.

11. Récipient tel qu'il est décrit dans la Revendication 9, caractérisé par le fait que l'emballage (4) est fait en papier imperméabilisé.

12. Récipient tel qu'il est décrit dans la Revendication 9, caractérisé par le fait que l'emballage (4) est fait en plastiques "thermoformés".

13. Récipient tel qu'il est décrit dans la Revendication 9, caractérisé par le fait que l'emballage (4) est déchirable et est doté d'une languette (16) qui facilite la déchirure.

14. Récipient tel qu'il est décrit dans la Revendication 9, caractérisé par le fait que les bords de l'ouverture (6) dans l'emballage (4) peuvent être mis en contact pour sceller le récipient.

15. Récipient tel qu'il est décrit dans la Revendication 9, caractérisé par le fait que l'emballage (4) est fait en matériau comestible.

16. Récipient tel qu'il est décrit dans la Revendication 9, caractérisé par le fait que l'emballage (4) est doté d'un élément de scellement substantiellement rigide, séparé de l'emballage et impliquant, sur tout le bord, la paroi intérieure de l'emballage mentionné qui entoure l'ouverture.

17. Récipient tel qu'il est décrit dans la Revendication 9, caractérisé par le fait que l'élément (10,22,23) figé par la glace (12) est séparé de l'emballage (4) et est joint a celui-ci pendant la réalisation de l'emballage.

18. Récipient tel qu'il est décrit dans la Revendication 9, caractérisé par le fait que l'élément (10,22,23) figé par la glace ne fait qu'un avec l'emballage mentionné.

19. Récipient tel qu'il est décrit dans la Revendication 11, caractérisé par le fait qu'il consiste en une feuille perforée de papier imperméabilisé qui est pliée en plusieurs parties définissant les parois de l'emballage (4). L'élément est scellé sur toute la surface de contact sauf sur les points qui composent l'ouverture de remplissage (6).

20. Récipient tel qu'il est décrit dans la Revendication 19, caractérisé par le fait que la feuille de papier imperméabilisé est pliée de manière a définir les parois de l'emballage (4), l'élément extérieur (8) ainsi que l'élément intérieur (10,22,23).

21. Récipient tel qu'il est décrit dans la Revendication 18, caractérisé par le fait que l'élément intérieur (10,22) constitue une pluralité d'ouvertures figées.

22. Récipient tel qu'il est décrit dans la Revendication 18, caractérisé par le fait que l'élément intérieur consiste en au moins une nervure créée dans la feuille de papier imperméabilisé et tournée vers l'intérieur de l'emballage.

23. Récipient tel qu'il est décrit dans la Revendication 9, caractérisé par le fait que l'emballage (4) est séparé entre une première partie (20) jointe a l'élément extérieur (8) et formant une sorte de coupe pour recueillir les petites gouttes de glace , et une deuxième partie complètement amovible - l'élément intérieur (10, 22,23) étant joint a la première partie mentionnée (20).

24. Récipient tel qu'il est décrit dans la Revendication 9, caractérisé par le fait que l'emballage (4) est en forme de soufflet.

25. Assemblage d'une pluralité de récipients tels qu'ils sont décrits dans une ou plusieurs des Revendications 9 a 25, caractérisé par une pluralité d'emballages (4) constitués d'un seul tenant et séparables au moment de consommer la glace.
